(19) **Europäisches Patentamt / European Patent Office / Office européen des brevets**

(11) **EP 4 451 509 B1**

(12) **EUROPEAN PATENT SPECIFICATION**

(45) Date of publication and mention
of the grant of the patent:
**08.07.2026 Bulletin 2026/28**

(51) International Patent Classification (IPC):
*H02J 7/06* (2006.01)     *B60L 53/122* (2019.01)
*H02J 50/12* (2016.01)     *H02J 50/40* (2016.01)
*H02J 50/70* (2016.01)     *B60L 53/12* (2019.01)

(21) Application number: **23893050.7**

(22) Date of filing: **26.05.2023**

(52) Cooperative Patent Classification (CPC):
**B60L 53/122; B60L 53/12; H02J 50/12;**
B60L 2210/30; B60L 2210/40; H02J 50/402;
H02J 2105/37; Y02T 10/70; Y02T 10/7072

(86) International application number:
**PCT/CN2023/096669**

(87) International publication number:
**WO 2024/108949 (30.05.2024 Gazette 2024/22)**

(54) **WIRELESS CHARGING SYSTEM AND ELECTRIC VEHICLE**

DRAHTLOSES LADESYSTEM UND ELEKTROFAHRZEUG

SYSTÈME DE CHARGE SANS FIL ET VÉHICULE ÉLECTRIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **23.11.2022 CN 202211477602**

(43) Date of publication of application:
**23.10.2024 Bulletin 2024/43**

(73) Proprietor: **SHENZHEN VMAX NEW ENERGY
(GROUP) CO., LTD
Shenzhen, Guangdong 518000 (CN)**

(72) Inventors:
• **FENG, Yingying
Shenzhen, Guangdong 518000 (CN)**
• **YAO, Shun
Shenzhen, Guangdong 518000 (CN)**
• **LIU, Chang
Shenzhen, Guangdong 518000 (CN)**

(74) Representative: **Sun, Yiming
HUASUN Patent- und Rechtsanwälte
Friedrichstraße 33
80801 München (DE)**

(56) References cited:
CN-A- 109 617 250     CN-A- 115 056 660
CN-A- 115 056 660     CN-U- 206 364 564
US-A1- 2016 020 615     US-A1- 2017 240 055

## Description

### TECHNICAL FIELD

The present invention relates to the wirelessly charging technical field of electric vehicles, in particular a wireless charging system and an electric vehicle.

### BACKGROUND OF THE INVENTION

In recent years, as the electric vehicle industry rapidly developed in China, it is of great significance how to enable electric vehicles to be charged safely, conveniently and quickly. A traditional approach to electric vehicles charging is to gain electricity directly from a power grid via charging stations. However, when the electric vehicles are wired for charging, it is usual to expose some parts of charging sockets or cables, when high-power charging it is easy to produce electric sparks and arcs, which bring with serious safety hazards; in addition, it is necessary for users to manually operate the traditional wired charging mode, and because of human negligence and hardware wear and tear caused by frequently inserting plugs into and extracting plugs from the charging sockets, it is easy to cause poor contact, resulting in personal safety incidents in high-power environments.

In order to solve the above problems, it is usual to adopt near filed wireless power transmission technology to realize wirelessly charging for electric vehicles. Three parts are involved in the wireless charging technology for electric vehicles, including an energy supply unit, a transmitter and a receiver. The energy supply unit is floor-mounted or wall-mounted, and inputted with an alternating current, which rectifies the alternating current into a direct current, and generates a high-frequency current from the direct current through an inverter; the transmitter is installed on the ground or underground and connected with a pile terminal through a cable, converting the high-frequency current generated by the charging pile terminal into magnetic field energy and transmitting it; the receiver is installed on the bottom of a vehicle, receiving the magnetic field energy, and charging an electric vehicle battery through rectified induced currents result from the magnetic field energy.

However, as actually designed, the currents of the transmitter coil and the receiver coil gradually increase with growing power for wireless charging, this causes the voltages at both ends of the transmitter coil and the receiver coil to reach kV. The increase in voltage causes insulation and safety control problems (safety standards) that need more time and money for verification.

Therefore, how to design a wireless charging system and an electric vehicle to solve the insulation and safety control problems caused by the high voltages of the transmitter coil and the receiver coil in the prior art is a technical problem that needs to be solved urgently in the industry.

The following prior art documents also deal with wireless charging. CN 115 056 660 A discloses a wireless charging system, which includes a PFC network unit, an inverter network unit, an inverter resonance compensation network unit, a transmitting coil, a receiving coil, a rectifying resonance compensation network unit. US 2016/020615 A1 discloses an inductive energy transfer system, comprising a primary-side coil arrangement and a secondary-side coil arrangement, wherein the primary-side coil arrangement and the secondary-side coil arrangement, together with respective capacitances, form respective resonant circuits, wherein a primary-side coil system comprises two coils connected in series and wherein a secondary-side coil system comprises two coils connected in series.

### SUMMARY OF THE INVENTION

In view of the insulation and safety control problems caused by the high voltages of the transmitter coil and the receiver coil in the prior art, the invention proposes a wireless charging system and an electric vehicle according to the appended set of claims.

The technical solutions adopted in the present invention is to provide a wireless charging system comprising: a pile terminal used for wireless charging; a ground terminal, including an inverter circuit connected with the pile terminal, a first LCC (inductor capacitor capacitor) compensation circuit connected with the inverter circuit, and a transmitter coil used for wireless charging;

and a vehicle terminal, including a rectifier circuit connected with an on-board battery, a second LCC compensation circuit connected with the rectifier circuit, and a receiver coil matching with the transmitter coil, wherein the transmitter coil and the receiver coil are all provided with a tap structure.

Further, the transmitter coil includes a first coil and a second coil that are used to form the center tap structure; a second end of the first coil is connected with a first end of the second coil to form a center tapped end; the receiver coil includes a third coil and a fourth coil that are used to form the center tap structure; the third coil is configured to match the first coil, the fourth coil is configured to match the second coil, and a second end of the third coil is connected with a first end of the fourth coil to form a center tapped end.

Further, the first LCC compensation circuit includes an inductor LF1, a capacitor CF1, a capacitor C1A and a capacitor C1B; one end of the inductor LF1 is connected to the inverter circuit, the other end of the inductor LF1 is connected with the capacitor C1A in series, then connected to a first end of the first coil; one end of the capacitor C1B is connected between the inductor LF1 and the capacitor C1A, the other end the capacitor C1B is connected to a second end of the second coil; one end of the capacitor CF1 is connected between the inductor LF1 and the capacitor C1A, and the other end the capacitor CF1 is connected to the center tapped end of the transmitter coil.

Further, the second LCC compensation circuit includes an inductor LF2, a capacitor CF2, a capacitor C2A and a capacitor C2B, one end of the inductor LF2 is connected to the rectifier circuit, the other end of the inductor LF2 is connected with the capacitor C2A in series, then connected to a first end of the third coil, one end of the capacitor C2B is connected between the inductor LF2 and the capacitor C2A, the other end of the capacitor C2B is connected to a second end of the fourth coil; one end of the capacitor CF2 is connected between the inductor LF2 and the capacitor C2A, and the other end of the capacitor CF2 is connected to the center tapped end of the receiver coil.

Further, the transmitter coil includes a first coil and a second coil arranged separately, and a second end of the first coil and a first end of the second coil together serve as a center tapped end of the transmitter coil; the receiver coil includes a third coil and a fourth coil arranged separately, the third coil is configured to match the first coil; the fourth coil is configured to match the third coil, and a second end of the third coil and a first end of the fourth coil together serve as a center tapped end of the receiver coil.

Further, the first LCC compensation circuit includes an inductor LF1, a capacitor CF1, a capacitor C1A and a capacitor C1B; one end of the inductor LF1 is connected to the inverter circuit, the other end of the inductor LF1 is connected with the capacitor C1A in series, then connected to a first end of the first coil; one end of the capacitor C1B is connected between the inductor LF1 and the capacitor C1A, the other end of the capacitor C1B is connected to a second end of the second coil; one end of the capacitor CF1 is connected between the inductor LF1 and the capacitor C1A, and the other end of the capacitor CF1 is connected to a second end of the first coil and a first end of the second coil, respectively.

Further, the second LCC compensation circuit includes an inductor LF2, a capacitor CF2, a capacitor C2A and a capacitor C2B; one end of the inductor LF2 is connected to the rectifier circuit, the other end of the inductor LF2 is connected with the capacitor C2A in series, then connected to a first end of the third coil, one end of the capacitor C2B is connected between the inductor LF2 and the capacitor C2A, the other end of the capacitor C2B is connected to a second end of the second coil; one end of the capacitor CF2 is connected between the inductor LF2 and the capacitor C2A, and the other end of the capacitor CF2 is connected to a second end of the third coil and a first end of the fourth coil, respectively.

Further, the transmitter coil and the receiver coil should meet the following formulas,

$$C_{1A} + L_{BPAllk} = C_{1B} + L_{BPBllk};$$

$$C_{2A} + L_{VPAllk} = C_{2B} + L_{VPBllk};$$

where, $C_{1A}$ is a capacitance value of the capacitor C1A, $C_{1B}$ is a capacitance value of the capacitor C1B, $C_{2A}$ is a capacitance value of the capacitor C2A, $C_{2B}$ is a capacitance value of the capacitor C2B, $L_{BPAllk}$ is a leakage inductance of the first coil, $L_{BPBllk}$ is a leakage inductance of the second coil, $L_{VPAllk}$ is a leakage inductance of the third coil, and $L_{VPBllk}$ is a leakage inductance of the fourth coil.

Further, the inverter circuit includes a power switch transistor Q1, a power switch transistor Q2, a power switch transistor Q3, a power switch transistor Q4 that are used to form a full-bridge circuit, and the power switch transistor Q1 and the power switch transistor Q2 form a first bridge arm, and the power switch transistor Q3 and the power switch transistor Q4 form a second bridge arm;

Drain electrodes of the power switch transistor Q1 and the power switch transistor Q3 are connected to a positive end of an input voltage Vin, source electrodes of the power switch transistor Q2 and the power switch transistor Q4 are connected to a negative end of the input voltage Vin, the inductor LF1 is connected between a source electrode of the power switch transistor Q1 and a drain electrode of the power switch transistor Q2, and the center tapped end of the transmitter coil is connected between a source electrode of the power switch transistor Q3 and a drain electrode of the power switch transistor Q4.

Further, duty ratios of the power switch transistor Q1, the power switch transistor Q2, the power switch transistor Q3 and the power switch transistor Q4 are set as 0.5, and the power switch transistor Q1 conducts with the power switch transistor Q2 in a complementary mode, and the power switch transistor Q3 conducts with the power switch transistor Q4 in a complementary mode; in addition, an output voltage of the inverter circuit is adjusted according to a phase shift angle between the power switch transistor Q2 and the power switch transistor Q4.

Further, the power switch transistor Q1 conducts with the power switch transistor Q2 in a complementary mode and the power switch transistor Q3 conducts with the power switch transistor Q4 in a complementary mode; in addition, a phase difference between the power switch transistor Q2 and the power switch transistor Q4 is set to be $\pi$, and both the

transistors have a same duty ratio, and the output voltage of the inverter circuit is adjusted according to the duty ratio of the power switch transistor Q2 and the power switch transistor Q4.

Further, the rectifier circuit includes a power switch transistor Q5, a power switch transistor Q6, a power switch transistor Q7, a power switch transistor Q8 that are used to form a full-bridge circuit, and the power switch transistor Q5 and the power switch transistor Q6 form a third bridge arm, and the power switch transistor Q7 and the power switch transistor Q8 form a fourth bridge arm;

drain electrodes of the power switch transistor Q5 and the power switch transistor Q7 are connected to a positive end of an output voltage Vout, source electrodes of the power switch transistor Q6 and the power switch transistor Q8 are connected to a negative end of the output voltage Vout, the inductor LF2 is connected between a source electrode of the power switch transistor Q5 and a drain electrode of the power switch transistor Q6, and the center tapped end of the receiver coil is connected between a source electrode of the power switch transistor Q7 and a drain electrode of the power switch transistor Q8.

Further, duty ratios of the power switch transistor Q5, the power switch transistor Q6, the power switch transistor Q7 and the power switch transistor Q8 are set as 0.5, and the power switch transistor Q5 conducts with the power switch transistor Q6 in a complementary mode, and the power switch transistor Q7 conducts with the power switch transistor Q8 in a complementary mode; in addition, an input voltage of the rectifier circuit is adjusted according to a phase shift angle between the power switch transistor Q6 and the power switch transistor Q8.

Further, the power switch transistor Q5 conducts with the power switch transistor Q6 in a complementary mode and the power switch transistor Q7 conducts with the power switch transistor Q8 in a complementary mode; in addition, a phase difference between the power switch transistor Q6 and the power switch transistor Q8 is set to be $\pi$, and both the transistors have a same duty ratio, and the input voltage of the rectifier circuit is adjusted according to the duty ratio of the power switch transistor Q6 and the power switch transistor Q8.

Further, the rectifier circuit includes a diode D5, a diode D7, a power switch transistor Q6, and a power switch transistor Q8;

Negative electrodes of the diode D5 and the diode D7 are connected to a positive end of an output voltage Vout; source electrodes of the power switch transistor Q6 and the power switch transistor Q8 are connected to a negative end of the output voltage Vout, and the inductor LF2 is connected between a positive electrode of the diode D5 and a drain electrode of the power switch transistor Q6, and the center tapped end of the receiver coil is connected between a positive electrode of the diode D7 and a drain electrode of the power switch transistor Q8.

Further, a phase difference between the power switch transistor Q6 and the power switch transistor Q8 is set to be $\pi$; in addition, the power switch transistor Q6 and the power switch transistor Q8 have a same duty ratio, and an input voltage of the rectifier circuit is adjusted according to the duty ratio of the power switch transistor Q6 and the power switch transistor Q8.

Further, the ground terminal meets the following formulas,

$$C_{F1} * L_{F1} = \frac{1}{w_0^2} \ ;$$

$$L_{BPA} = L_{BPAllk} + L_m;$$

$$L_{BPB} = L_{BPBllk} + L_m;$$

$$C_{1A} + L_{BPAllk} = C_{1B} + L_{BPBllk} = \frac{1}{w_0^2};$$

where, $C_{F1}$ is a capacitance value of the capacitor CF1, $C_{1A}$ is a capacitance value of the capacitor C1A, $C_{1B}$ is a capacitance value of the capacitor C1B, $L_{F1}$ is an inductance of the inductor LF1, $L_{BPA}$ is an inductance of the first coil, $L_{BPB}$ is an inductance of the second coil, and $W_0$ is a resonant angle frequency of the capacitor Cf1 and the inductor LF1, $L_{BPAllk}$ is a leakage inductance of the first coil, $L_{BPBllk}$ is a leakage inductance of the second coil, and $L_m$ is a mutual inductance of the transmitter coil and the receiver coil.

Further, the vehicle terminal meets the following formulas,

$$C_{F2} * L_{F2} = \frac{1}{w_0^2} \ ;$$

$$L_{VPA} = L_{VPAllk} + L_m;$$

$$L_{VPB} = L_{VPBllk} + L_m;$$

$$C_{2A} + L_{VPAllk} = C_{2B} + L_{VPBllk} = \frac{1}{w_0^2};$$

where, $C_{F2}$ is a capacitance value of the capacitor CF2, $C_{2A}$ is a capacitance value of the capacitor C2A, $C_{2B}$ is a capacitance value of the capacitor C2B, $L_{F2}$ is an inductance of the inductor LF2, $L_{vPA}$ is an inductance of the third coil, $L_{VPB}$ is an inductance of the fourth coil, and $W_0$ is a resonant angle frequency of the capacitor Cf1 and the inductor LF1, $L_{VPAllk}$ is a leakage inductance of the third coil, $L_{VPBllk}$ is a leakage inductance of the fourth coil, and $L_m$ is a mutual inductance of the transmitter coil and the receiver coil.

The present invention further provides an electric vehicle having the wireless charging system as above.

Compared with the prior art, the present invention has at least the following beneficial effects.

In the present invention, the transmitter coil and the receiver coil are provided with a tap structure, which can enable the voltages of the transmitter coil and the receiver coil to decrease by one time, solving the insulation and safety control problems caused by the high voltages of the transmitter coil and the receiver coil, improving the reliability of products and reducing development costs and material costs for products.

**BRIEF DESCRIPTION OF THE DRAWINGS**

In order to explain the technical solutions in the embodiments of the present invention or the prior art more clearly, the drawings needing to be used in the descriptions of the embodiments or the prior art are briefly introduced hereinafter. Obviously, the drawings in the following descriptions are only exemplary, and for those of ordinary skills in the art, other drawings may also be derived and obtained based on the provided drawings without going through any creative work.

Fig.1 is a connection diagram of the wireless charging system in the present invention.

Fig.2 is a connection diagram of the wireless charging system in another example of the present invention.

Fig.3 is a connection diagram of the inverter circuit of the present invention.

Fig. 4 is a control timing diagram of the inverter circuit of the present invention.

Fig. 5 is a control timing diagram of the inverter circuit in another example of the present invention.

Fig. 6 is a connection diagram of the rectifier circuit in the present invention.

Fig. 7 is a control timing diagram of the rectifier circuit in the present invention.

Fig. 8 is a control timing diagram of the rectifier circuit in another example of the present invention.

Fig. 9 is a connection diagram of the rectifier circuit in another example of the present invention.

Fig.10 is a control timing diagram of the rectifier circuit in the example in Fig.9.

**DETAILED DESCRIPTION OF SOME EMBODIMENTS**

In order to make the technical problem, technical solution and beneficial effect to be solved by the present invention more clearly understood, we shall further describe the present invention in detail in combination with the drawings and examples as follows. It should be understood that the specific examples described herein are only used to explain the present invention, not to pose a limitation on the present invention.

Therefore, occurrence of a technical feature in one example herein does not imply that all examples involved in the present invention must have this technical feature. Although some technical features can be combined to illustrate possible system designs, they can also be used in other combinations that are not explicitly stated. Unless otherwise specified, the combination of technical features in the examples is not intended to pose a limitation on the present invention.

We shall describe the principle and structure of the present invention in detail in combination with the drawings and examples as follows.

In order to solve the problem that high-power charging is easy to produce electric sparks and arcs, which bring with serious safety hazards in the prior art, it is usual to adopt near filed wireless power transmission technology to realize wirelessly electric vehicles charging. However, the currents of the transmitter coil and the receiver coil gradually increases with growing power for wireless charging, this causes the voltages at both ends of the transmitter coil and the receiver coil to reach kV, thus the increase in voltage causes insulation and safety control problems. The idea of the present invention is that the transmitter coil and the receiver coil are replaced with a tap structure, which can enable the voltages of the transmitter coil and the receiver coil to decrease by one time.

The wireless charging system proposed by the present invention includes a pile terminal used for wireless charging, a ground terminal, and a vehicle terminal, wherein the pile terminal is used as an energy supply unit, which is generally floor-mounted or wall-mounted, and input with AC mains, rectifying an alternating current into a direct current, and generating high-frequency currents through an inverter;

The ground terminal acting as a transmitter is installed on the ground or underground and connected with the pile terminal through a cable, converting the high-frequency currents generated by the pile terminal into magnetic field energy and transmitting it;

The vehicle terminal acting as a receiver is installed on the bottom of a vehicle, receiving the magnetic field energy, and charging an electric vehicle battery through rectified induced currents result from the magnetic field energy.

The pile terminal, the ground terminal, and the vehicle terminal cooperate with each other, so it is achievable to realize wirelessly electric vehicles charging and avoid the electric arcs and electric sparks caused by high-power charging.

Further, the ground terminal includes an inverter circuit connected with the pile terminal, a first LCC compensation circuit connected with the inverter circuit, and a transmitter coil used for wireless charging.

The vehicle terminal includes a rectifier circuit connected with an on-board battery, a second LCC compensation circuit connected with the rectifier circuit, and a receiver coil matching with the transmitter coil.

When the wireless charging system operates, the inverter circuit can convert the direct current transmitted by the pile terminal into the alternating current, which the first LCC compensation circuit compensates for, and transmits to the receiver coil through the transmitter coil; after the receiver coil receives the energy transmitted by the transmitter coil, the second LCC compensation circuit compensates for the alternating current, which is finally rectified by the rectifier circuit into direct current for charging the on-board battery, so as to realize the function of wirelessly charging on-board batteries.

In order to solve the problems of electric arcs and electric sparks that may occur in the process of wireless charging, the transmitter coil and the receiver coil are all provided with a tap structure in the present invention.

In one example of the present invention, the transmitter coil includes a first coil and a second coil that are used to form a center tap structure, wherein a second end of the first coil is connected with a first end of the second coil to form a center tapped end; the receiver coil includes a third coil and a fourth coil that are used to form a center tap structure, wherein the third coil is configured to match the first coil, the fourth coil is configured to match the second coil, and a second end of the third coil is connected with a first end of the fourth coil to form a center tapped end.

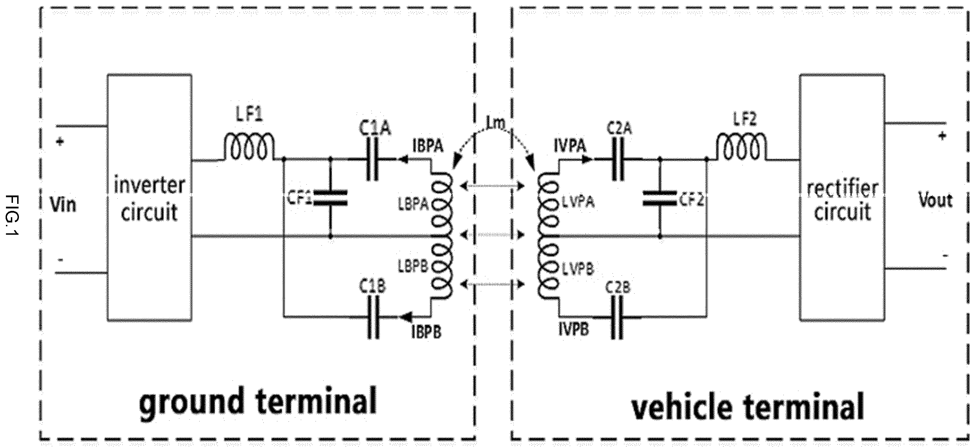

Referring to Fig.1, which is a connection diagram of the wireless charging system in this example, LBPA is the first coil, LBPB is the second coil, LVPA is the third coil, LVPB is the fourth coil; an inductor LF1, a capacitor CF1, a capacitor C1A and a capacitor C1B form a first LCC compensation circuit; an inductor LF2, a capacitor CF2, a capacitor CA and a capacitor C2B form a second LCC compensation circuit, wherein:

In the first LCC compensation circuit, one end of the inductor LF1 is connected to the inverter circuit, the other end of the inductor LF1 is connected with the capacitor C1A in series, then connected to the first end of the first coil; one end of the capacitor C1B is connected between the inductor LF1 and the capacitor C1A, the other end of the capacitor C1B is connected to the second end of the second coil; one end of the capacitor CF1 is connected between the inductor LF1 and the capacitor C1A, and the other end of the capacitor CF1 is connected to the center tapped end of the transmitter coil;

In the second LCC compensation circuit, one end of the inductor LF2 is connected to the rectifier circuit, the other end of the inductor LF2 is connected with the capacitor C2A in series, then connected to a first end of the third coil, one end of the capacitor C2B is connected between the inductor LF2 and the capacitor C2A, the other end of the capacitor C2B is connected to the second end of the fourth coil; one end of the capacitor CF2 is connected between the inductor LF2 and the capacitor C2A, and the other end of the capacitor CF2 is connected to the center tapped end of the receiver coil.

Lm is defined as a mutual inductance of a loosely coupled transformer (a transformer composed of the transmitter coil and the receiver coil), and LBPAllk represents a leakage inductance of LBPA, LBPBllk represents a leakage inductance of LBPB, LVPAllk represents a leakage inductance of LVPA, and LVPBllk represents a leakage inductance of LVPB.

It is possible to get the following formulas.

$$L_{BPA} = L_{BPAllk} + L_m;$$

$$L_{BPB} = L_{BPBllk} + L_m;$$

$$L_{VPA} = L_{VPAllk} + L_m;$$

$$L_{VPB} = L_{VPBllk} + L_m;$$

Given: VAB is a fundamental voltage obtained after passing an input voltage Vin through the inverter circuit, that is, an output voltage of the inverter circuit, and Vab is a fundamental voltage obtained before passing an output voltage Vout through the inverter circuit, that is, an input voltage of the inverter circuit; According to the Fourier decomposition, it is possible to deduce the following formulas.

$$V_{AB} = V_{in} * \frac{2\sqrt{2}}{\pi};$$

$$V_{ab} = V_{out} * \frac{2\sqrt{2}}{\pi};$$

In the above components, a relation involved in all impedance is shown as follows.

$$C_{F1} * L_{F1} = \frac{1}{w_0^2};$$

$$C_{F2} * L_{F2} = \frac{1}{w_0^2};$$

$$\left( \frac{(C_{1A}+L_{BPAllk})*(C_{1B}+L_{BPBllk})}{C_{1A}+L_{BPAllk}+C_{1B}+L_{BPBllk}} + L_m \right) * C_{F1} = \frac{1}{w_0^2};$$

$$\left( \frac{(C_{2A}+L_{VPAllk})*(C_{2B}+L_{VPBllk})}{C_{2A}+L_{VPAllk}+C_{2B}+L_{VPBllk}} + L_m \right) * C_{F2} = \frac{1}{w_0^2};$$

Where, WO represents a resonant angle frequency of the inductor LF1 and capacitor CF1 (WO also represents a resonant angle frequency of the inductor LF2 and capacitor CF2); it is possible to obtain the following formulas.

$$C_{1A} + L_{BPAllk} = C_{1B} + L_{BPBllk};$$

$$C_{2A} + L_{VPAllk} = C_{2B} + L_{VPBllk};$$

According to the superposition theorem and the above relation, it is possible to give the following calculations.

$$I_{BPA} = \frac{V_{AB}}{\frac{\frac{(C_{1A}+L_{BPAllk})*(C_{1B}+L_{BPBllk})}{C_{1A}+L_{BPAllk}+C_{1B}+L_{BPBllk}}+L_m}{2}} = \frac{V_{AB}*\frac{1}{2}}{w_0*L_{F1}};$$

$$I_{BPB} = \frac{V_{AB}}{\frac{(C_{1A}+L_{BPAllk})*(C_{1B}+L_{BPBllk})}{C_{1A}+L_{BPAllk}+C_{1B}+L_{BPBllk}}+Lm} = \frac{V_{AB}*\frac{1}{2}}{w_0*L_{F1}};$$

$$I_{VPA} = \frac{V_{ab}}{\frac{(C_{2A}+L_{VPAllk})*(C_{2B}+L_{VPBllk})}{C_{2A}+L_{VPAllk}+C_{2B}+L_{VPBllk}}+Lm} = \frac{V_{ab}*\frac{1}{2}}{w_0*L_{F2}};$$

$$I_{VPB} = \frac{V_{ab}}{\frac{(C_{2A}+L_{VPAllk})*(C_{2B}+L_{VPBllk})}{C_{2A}+L_{VPAllk}+C_{2B}+L_{VPBllk}}+Lm} = \frac{V_{ab}*\frac{1}{2}}{w_0*L_{F2}};$$

Then, the values of the voltage UBPA between the two ends of LBPA, the voltage UBPB between the two ends of LBPB, the voltage UVPA between the two ends of LVPA, and the voltage UVPB between the two ends of LVPB are calculated respectively, as follows.

$$U_{BPA} = \frac{V_{in}*\frac{\sqrt{2}}{\pi}}{L_{F1}} * L_{BPA};$$

$$U_{BPB} = \frac{V_{in}*\frac{\sqrt{2}}{\pi}}{L_{F1}} * L_{BPB};$$

$$U_{VPA} = \frac{V_{out}*\frac{\sqrt{2}}{\pi}}{L_{F2}} * L_{VPA};$$

$$U_{VPB} = \frac{V_{out}*\frac{\sqrt{2}}{\pi}}{L_{F2}} * L_{VPB};$$

It can be seen from the above that, compared with the traditional LCC topology, in the wireless charging system proposed by the present invention, either the voltage of the transmitter coil or the voltage of the receiver coil decreases by one time, as well as the design costs for insulation and safety control possibly reduces in practical applications, enhancing the reliability of products.

In another example of the present invention, it is possible to split the transmitter coil of the center tap structure composed of LBPA and LBPB into two transmitter coils that are independently connected in parallel with each other. It is convenient for this connection to form the two coils, further reducing costs.

In this example, the transmitter coil includes a first coil and a second coil arranged separately, and the second end of the first coil and the first end of the second coil together serve as a center tapped end of the transmitter coil.

The receiver coil includes a third coil and a fourth coil arranged separately, the third coil is configured to match the first coil; the fourth coil is configured to match the third coil, and the second end of the third coil and the first end of the fourth coil together serve as a center tapped end of the receiver coil.

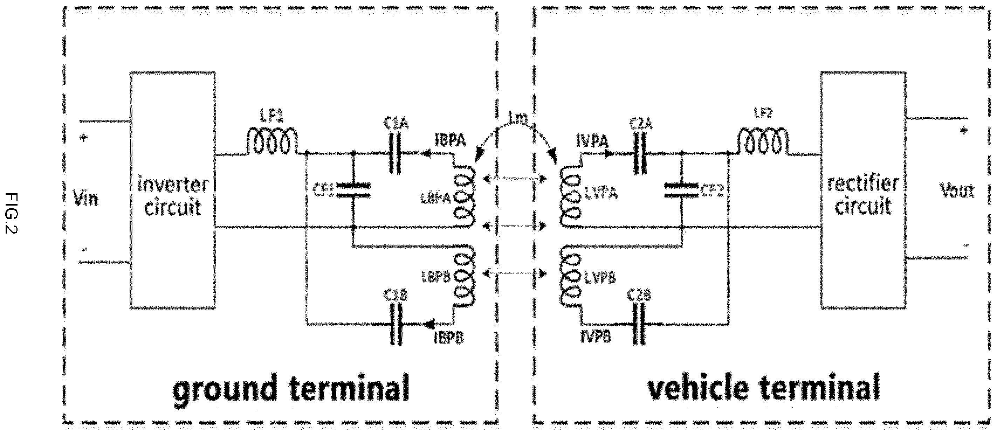

Referring to Fig.2, in this example, in the first LCC compensation circuit, one end of the inductor LF1 is connected to the inverter circuit, the other end of the inductor LF1 is connected with the capacitor C1A in series, then connected to the first end of the first coil; one end of the capacitor C1B is connected between the inductor LF1 and the capacitor C1A, the other end of the capacitor C1B is connected to the second end of the second coil; one end of the capacitor CF1 is connected between the inductor LF1 and the capacitor C1A, and the other end of the capacitor CF1 is connected to the second end of the first coil and the first end of the second coil, respectively.

In the second LCC compensation circuit, one end of the inductor LF2 is connected to the rectifier circuit, the other end of the inductor LF2 is connected with the capacitor C2A in series, then connected to the first end of the third coil, one end of the capacitor C2B is connected between the inductor LF2 and the capacitor C2A, the other end of the capacitor C2B is connected to the second end of the second coil; one end of the capacitor CF2 is connected between the inductor LF2 and the capacitor C2A, and the other end of the capacitor CF2 is connected to the second end of the third coil and the first end of the fourth coil, respectively.

Further, as known from an analysis according to the circuit principle, when LBPA and LBPB are equal to each other, C1A and C1B are equal to each other; when LVPA and LVPB are equal to each other, C2A and C2B are equal to each other, at this time the voltages and currents between both ends of LBPA and LBPB are equal to each other, respectively, and the voltages and currents between both ends of LVPA and LVPB are equal to each other, respectively. When LVPA and LVPB are not equal to each other, there will be respectively differences in the voltages and currents between both ends of LBPA and LBPB, LVPA and LVPB; thus, in order to ensure the reliability and costs of products, we should preferentially give a guarantee that the currents of the two coils are consistent with each other.

From the process of deducing the currents of LBPA, LBPB, LVPA, LVPB above,

$$C_{1A} + L_{BPAllk} = C_{1B} + L_{BPBllk};$$

$$C_{2A} + L_{VPAllk} = C_{2B} + L_{VPBllk};$$

It can be seen that the following equations are true when the above equations are true.

15

$$C_{1A} + L_{BPA} = C_{1B} + L_{BPB};$$

$$C_{2A} + L_{VPA} = C_{2B} + L_{VPB};$$

IBPA and IBPB are equal to each other, IVPA and IVPB are equal to each other.

In this regard, in order to ensure the reliability and costs of products, in an example useful for understanding the present invention, the transmitter coil and the receiver coil should meet the following conditions.

$$C_{1A} + L_{BPAllk} = C_{1B} + L_{BPBllk};$$

$$C_{2A} + L_{VPAllk} = C_{2B} + L_{VPBllk};$$

Where, $C_{1A}$ is a capacitance value of the capacitor C1A, $C_{1B}$ is a capacitance value of the capacitor C1B, $C_{2A}$ is a capacitance value of the capacitor C2A, $C_{2B}$ is a capacitance value of the capacitor C2B, $L_{BPAllk}$ is a leakage inductance of the first coil, $L_{BPBllk}$ is a leakage inductance of the second coil, $L_{VPAllk}$ is a leakage inductance of the third coil, and $L_{VPBllk}$ is a leakage inductance of the fourth coil.

By way of measuring the inductances of LBPA, LBPB, LVPA, and LVPB separately, it is possible to calculate C1A, C1B, C2A, and C2B according to the inductances obtained from the above measurement and the above equation, respectively, and achieve an equality between IBPA and IBPB, and an equality between IVPP and IVPB by changing the values of C1A, C1B, C2A, and C2B.

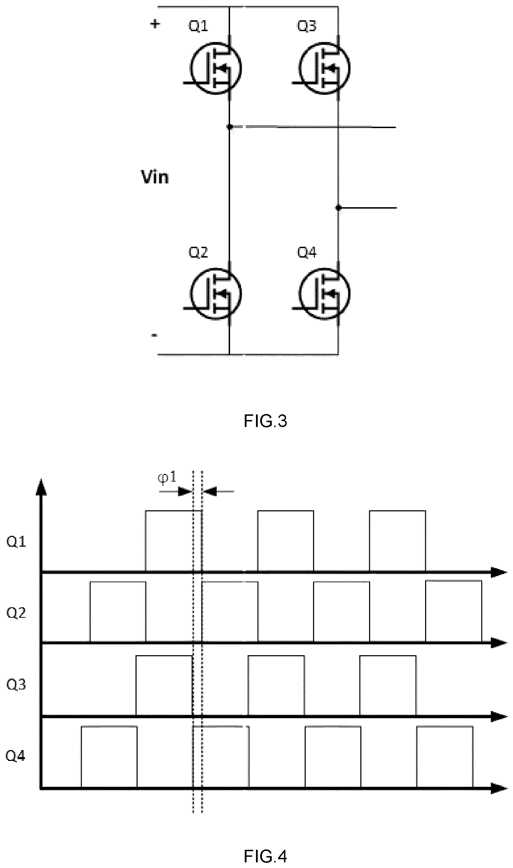

Further, in the present invention, it is possible to adjust the currents of LBPA and LBPB by changing the fundamental voltage VAB obtained after passing the input voltage Vin through the inverter circuit, we shall describe the control timing of the present invention in combination with Fig.3 as follows.

Referring to Fig. 3, the inverter circuit in the present invention includes a power switch transistor Q1, a power switch transistor Q2, a power switch transistor Q3, a power switch transistor Q4 that are used to form a full-bridge circuit, and the power switch transistor Q1 and the power switch transistor Q2 form a first bridge arm, and the power switch transistor Q3 and the power switch transistor Q4 form a second bridge arm.

Drain electrodes of the power switch transistor Q1 and the power switch transistor Q3 are connected to a positive end of the input voltage Vin, source electrodes of the power switch transistor Q2 and the power switch transistor Q4 are connected to a negative end of the input voltage Vin, the inductor LF1 is connected between a source electrode of the power switch transistor Q1 and a drain electrode of the power switch transistor Q2, and the center tapped end of the transmitter coil is connected between a source electrode of the power switch transistor Q3 and a drain electrode of the power switch transistor Q4.

Among them, for the power switch transistor Q1~ the power switch transistor Q4, it is possible to use active devices such as MOS transistors and IGBT transistors.

Referring to Fig.4, which is a control timing diagram of each power switch transistor in the inverter circuit. In the present invention, setting the duty ratios of the power switch transistor Q1, the power switch transistor Q2, the power switch transistor Q3 and the power switch transistor Q4 as 0.5, so that the power switch transistor Q1 conducts with the power switch transistor Q2 in a complementary mode, and the power switch transistor Q3 conducts with the power switch transistor Q4 in a complementary mode; in addition, the output voltage (fundamental voltage VAB) of the inverter circuit is adjusted according to a phase shift angle between the power switch transistor Q2 and the power switch transistor Q4.

Specifically, according to this control timing, the above inverter circuit can give the following calculation formulas according to the Fourier decomposition.

$$V_{AB} = V_{in} * \frac{2\sqrt{2}}{\pi} * \sin{(\pi * \varphi_1)};$$

$$I_{BPA} = I_{BPB} = \frac{V_{AB} * \frac{1}{2}}{w_0 * L_{F1}} = \frac{V_{in} * \frac{\sqrt{2}}{\pi} * \sin{(\pi * \varphi_1)}}{w_0 * L_{F1}};$$

Where, $\varphi_1$ represents a phase shift angle between the power switch transistor Q2 and the power switch transistor Q4; it can be seen from the above formulas that by way of setting as above, the fundamental voltage VAB is only related to the input voltage Vin and the phase-shift angle $\varphi_1$, and the fundamental voltage VAB can be adjusted by means of the phase shift angle $\varphi_1$ under the condition that the input voltage Vin is unchanged.

For the same reason, as can be seen from the above formulas, the currents IBPA and IBPB in the first and second coils are only related to the input voltage Vin, the inductor LF1, and the phase shift angle $\varphi_1$, so when the input voltage Vin and the inductor LF1 remain unchanged, the currents IBPA and IBPB can be adjusted by means of the phase shift angle $\varphi_1$.

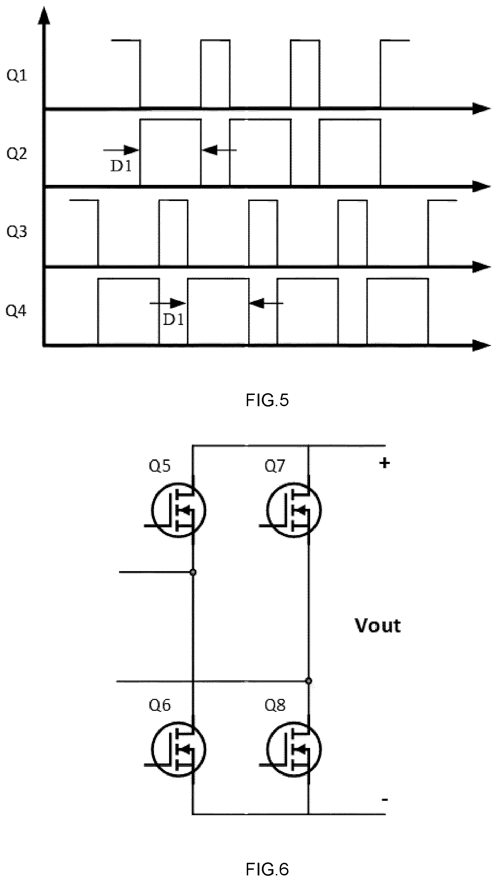

In another example of the present invention, based on the rectifier circuit proposed in Fig.3, the present invention is also configured with another control timing. Referring to Fig.5, the present invention is configured to enable the power switch transistor Q1 to conduct with the power switch transistor Q2 in a complementary mode and the power switch transistor Q3 to conduct with the power switch transistor Q4 in a complementary mode, as well as the phase difference between the power switch transistor Q2 and the power switch transistor Q4 to be $\pi$, so that both the transistors have the same duty ratio, and the fundamental voltage VAB is adjusted according to the duty ratio of the power switch transistor Q2 and the power switch transistor Q4.

Specifically, according to this control timing, the above inverter circuit can give the following calculation formulas according to the Fourier decomposition.

$$V_{AB} = V_{in} * \frac{2\sqrt{2}}{\pi} * \sin{(\pi * (1 - D_1))};$$

$$I_{BPA} = I_{BPB} = \frac{V_{AB} * \frac{1}{2}}{w_0 * L_{F1}} = \frac{V_{in} * \frac{\sqrt{2}}{\pi} * \sin{(\pi * (1 - D_1))}}{w_0 * L_{F1}};$$

Where, D1 represents a duty ratio of the power switch transistor Q2 and the power switch transistor Q4; it can be seen from the above formulas that by way of setting as above, the fundamental voltage VAB is only related to the input voltage Vin and the duty ratio D1, and the fundamental voltage VAB can be adjusted by means of the duty ratio D1 under the condition that the input voltage Vin is unchanged.

For the same reason, as can be seen from the above formulas, the currents IBPA and IBPB in the first and second coils are only related to the input voltage Vin, the inductor LF1, and the duty ratio D1, so when the input voltage Vin and the inductor LF1 remain unchanged, the currents IBPA and IBPB can be adjusted by means of the duty ratio D1.

Furthermore, in the present invention, the currents of LVPA and LVPB can also be adjusted by changing the fundamental voltage Vab obtained before rectifying the output voltage Vout; the control timing of the present invention is described in combination with Fig.4;

Referring to Fig.6, the rectifier circuit in the present invention includes a power switch transistor Q5, a power switch transistor Q6, a power switch transistor Q7, a power switch transistor Q8 that are used to form a full-bridge circuit, and the power switch transistor Q5 and the power switch transistor Q6 form a third bridge arm, and the power switch transistor Q7 and the power switch transistor Q8 form a fourth bridge arm.

Drain electrodes of the power switch transistor Q5 and the power switch transistor Q7 are connected to a positive end of the output voltage Vout, source electrodes of the power switch transistor Q6 and the power switch transistor Q8 are connected to a negative end of the output voltage Vout, the inductor LF2 is connected between a source electrode of the power switch transistor Q5 and a drain electrode of the power switch transistor Q6, and the center tapped end of the receiver coil is connected between a source electrode of the power switch transistor Q7 and a drain electrode of the power switch transistor Q8.

Among them, for the power switch transistor Q5~ the power switch transistor Q8, it is possible to use active devices such as MOS transistors and IGBT transistors.

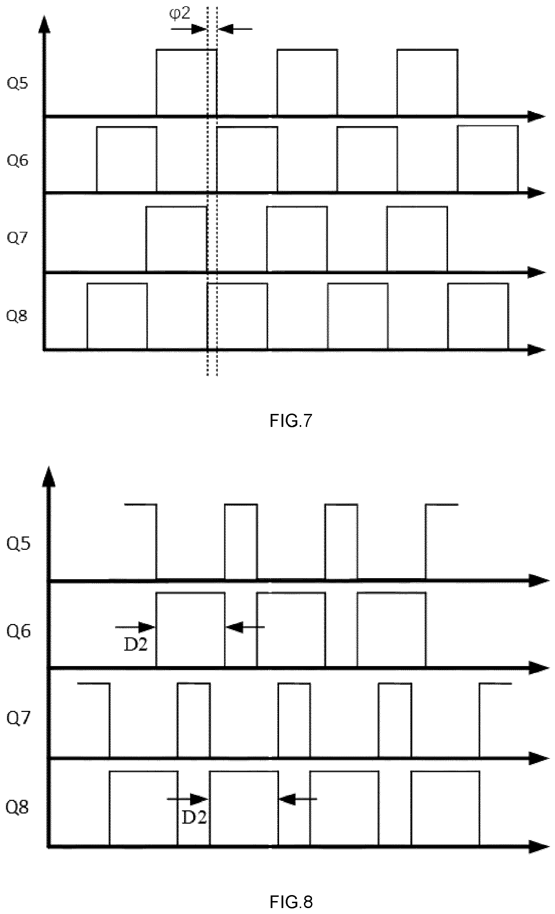

Referring to Fig.7, which is a control timing diagram of each power switch transistor in the rectifier circuit. In the present invention, setting the duty ratios of the power switch transistor Q5, the power switch transistor Q6, the power switch transistor Q7 and the power switch transistor Q8 as 0.5, so that the power switch transistor Q5 conducts with the power switch transistor Q6 in a complementary mode, and the power switch transistor Q7 conducts with the power switch transistor Q8 in a complementary mode; in addition, the output voltage (fundamental voltage Vab) of the rectifier circuit is adjusted according to a phase shift angle between the power switch transistor Q6 and the power switch transistor Q8.

Specifically, according to this control timing, the above rectifier circuit can give the following calculation formulas according to the Fourier decomposition.

$$V_{ab} = V_{out} * \frac{2\sqrt{2}}{\pi} * \sin{(\pi * \varphi_2)};$$

$$I_{VPA} = I_{VPB} = \frac{V_{ab} * \frac{1}{2}}{w_0 * L_{F2}} = \frac{V_{out} * \frac{\sqrt{2}}{\pi} * \sin{(\pi * \varphi_2)}}{w_0 * L_{F2}};$$

Where, $\varphi_2$ represents a phase shift angle between the power switch transistor Q6 and the power switch transistor Q8; it can be seen from the above formulas that by way of setting as above, the fundamental voltage Vab is only related to the output voltage Vout and the phase-shift angle $\varphi_2$, and the fundamental voltage Vab can be adjusted by means of the phase shift angle $\varphi_2$ under the condition that the output voltage Vout is unchanged.

For the same reason, as can be seen from the above formulas, the currents IVPA and IVPB in the third and fourth coils are only related to the output voltage Vout, the inductor LF2, and the phase shift angle $\varphi_2$, so when the output voltage Vout and the inductor LF2 remain unchanged, the currents IVPA and IVPB can be adjusted by means of the phase shift angle $\varphi_2$.

In another example of the present invention, based on the rectifier circuit proposed in Fig.6, the present invention is also configured with another control timing. Referring to Fig.8, the present invention is configured to enable the power switch transistor Q5 to conduct with the power switch transistor Q6 in a complementary mode and the power switch transistor Q7 to conduct with the power switch transistor Q8 in a complementary mode, as well as the phase difference between the power switch transistor Q6 and the power switch transistor Q8 to be $\pi$, so that both the transistors have the same duty ratio, and the fundamental voltage Vab is adjusted according to the duty ratio of the power switch transistor Q6 and the power switch transistor Q8.

Specifically, according to this control timing, the above rectifier circuit can give the following calculation formulas according to the Fourier decomposition.

$$V_{ab} = V_{out} * \frac{2\sqrt{2}}{\pi} * \sin{(\pi * (1 - D_2))};$$

$$I_{VPA} = I_{VPB} = \frac{V_{ab} * \frac{1}{2}}{w_0 * L_{F2}} = \frac{V_{out} * \frac{\sqrt{2}}{\pi} * \sin{(\pi * (1 - D_2))}}{w_0 * L_{F2}};$$

Where, D2 represents a duty ratio of the power switch transistor Q6 and the power switch transistor Q8; it can be seen from the above formulas that by way of setting as above, the fundamental voltage Vab is only related to the output voltage Vout and the duty ratio D2, and the fundamental voltage Vab can be adjusted by means of the duty ratio D2 under the condition that the output voltage Vout is unchanged.

For the same reason, as can be seen from the above formulas, the currents IVPA and IVPB in the third and fourth coils are only related to the output voltage Vout, the inductor LF2, and the duty ratio D2, so when the output voltage Vout and the inductor LF2 remain unchanged, the currents IVPA and IVPB can be adjusted by means of the duty ratio D2.

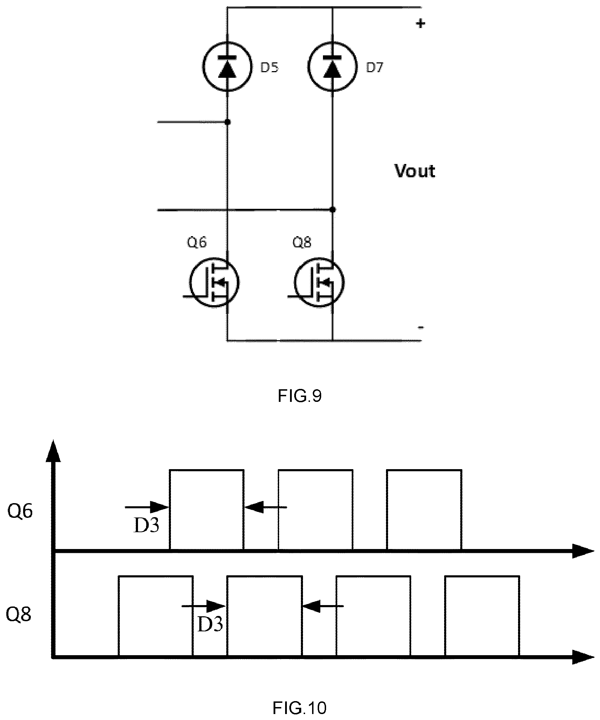

Referring to FIG.9, in another example of the present invention, the rectifier circuit includes a diode D5, a diode D7, a power switch transistor Q6, and a power switch transistor Q8.

Negative electrodes of the diode D5 and the diode D7 are connected to a positive end of the output voltage Vout; source electrodes of the power switch transistor Q6 and the power switch transistor Q8 are connected to a negative end of the output voltage Vout, and the inductor LF2 is connected between a positive electrode of the diode D5 and a drain electrode of the power switch transistor Q6, and the center tapped end of the receiver coil is connected between a positive electrode of the diode D7 and a drain electrode of the power switch transistor Q8.

Further, in another example of the present invention, based on the rectifier circuit proposed in Fig.9, the present invention is also configured with another control timing. Referring to Fig.10, the present invention is configured to enable the phase difference between the power switch transistor Q6 and the power switch transistor Q8 to be $\pi$, so that both the transistors have the same duty ratio, and the input voltage (fundamental voltage Vab) of the rectifier circuit is adjusted according to the duty ratio of the power switch transistor Q6 and the power switch transistor Q8.

Specifically, according to this control timing, the above rectifier circuit can give the following calculation formulas according to the Fourier decomposition.

$$V_{ab} = V_{out} * \frac{2\sqrt{2}}{\pi} * \sin{(\pi * (1 - D_3))};$$

$$I_{VPA} = I_{VPB} = \frac{V_{ab} * \frac{1}{2}}{w_0 * L_{F2}} = \frac{V_{out} * \frac{\sqrt{2}}{\pi} * \sin{(\pi * (1 - D_3))}}{w_0 * L_{F2}};$$

Where, D3 represents a duty ratio of the power switch transistor Q6 and the power switch transistor Q8; it can be seen from the above formulas that by way of setting as above, the fundamental voltage Vab is only related to the output voltage Vout and the duty ratio D3, and the fundamental voltage Vab can be adjusted by means of the duty ratio D3 under the condition that the output voltage Vout is unchanged.

For the same reason, as can be seen from the above formulas, the currents IVPA and IVPB in the third and fourth coils are only related to the output voltage Vout, the inductor LF2, and the duty ratio D3, so when the output voltage Vout and the inductor LF2 remain unchanged, the currents IVPA and IVPB can be adjusted by means of the duty ratio D3.

Further, in order to realize the above function, each device in the ground terminal of an example useful for understanding the present invention should meet the following conditions.

$$C_{F1} * L_{F1} = \frac{1}{w_0^2};$$

$$L_{BPA} = L_{BPAllk} + L_m;$$

$$L_{BPB} = L_{BPBllk} + L_m;$$

$$C_{1A} + L_{BPAllk} = C_{1B} + L_{BPBllk} = \frac{1}{w_0^2};$$

Where, $C_{F1}$ is a capacitance value of the capacitor CF1, $C_{1A}$ is a capacitance value of the capacitor C1A, $C_{1B}$ is a capacitance value of the capacitor C1B, $L_{F1}$ is an inductance of the inductor LF1, $L_{BPA}$ is an inductance of the first coil, $L_{BPB}$ is an inductance of the second coil, and WO is a resonant angle frequency of the capacitor CF1 and the inductor LF1, $L_{BPAllk}$ is a leakage inductance of the first coil, $L_{BPBllk}$ is a leakage inductance of the second coil, and $L_m$ is a mutual inductance of the transmitter coil and the receiver coil.

Specifically, in an example useful for understanding the present invention, the inductance of the first coil and the second coil is set to be 40uH, and the inductance of the inductor LF1 is set to be 20uH, and the capacitance value of the capacitor CF1 can be given according to the relation of $C_{F1} * L_{F1} = \frac{1}{w_0^2}$;

An example useful for understanding the present invention is configured to set the mutual inductances of the transmitter coil and the receiver coil to be 6uH, according to the following relation equations,

$$L_{BPA} = L_{BPAllk} + L_m;$$

$$L_{BPB} = L_{BPBllk} + L_m;$$

it is possible to give leakage inductances of the first coil and the second coil, respectively; and finally, according to the following relation equations,

$$C_{1A} + L_{BPAllk} = C_{1B} + L_{BPBllk} = \frac{1}{w_0^2};$$

It is possible to give capacitance values of the capacitor C1A and the capacitor C1B, respectively; thus, all parameters of the ground terminal have been designed.

Similarly, each device in the vehicle terminal should meet the following conditions.

$$C_{F2} * L_{F2} = \frac{1}{w_0^2};$$

$$L_{VPA} = L_{VPAllk} + L_m;$$

$$L_{VPB} = L_{VPBllk} + L_m;$$

$$C_{2A} + L_{VPAllk} = C_{2B} + L_{VPBllk} = \frac{1}{w_0^2};$$

Where, $C_{F2}$ is a capacitance value of the capacitor CF2, $C_{2A}$ is a capacitance value of the capacitor C2A, $C_{2B}$ is a capacitance value of the capacitor C2B, $L_{F2}$ is an inductance of the inductor LF2, $L_{vPA}$ is an inductance of the third coil, $L_{VPB}$ is an inductance of the fourth coil, and WO is a resonant angle frequency of the capacitor CF1 and the inductor LF1 (the resonant angle frequency of the capacitor CF2 and the inductor LF2 is same as the resonant angle frequency of the capacitor CF1 and the inductor LF1, each of the two is WO), $L_{VPAllk}$ is a leakage inductance of the third coil, $L_{VPBllk}$ is a leakage inductance of the fourth coil, and $L_m$ is a mutual inductance of the transmitter coil and the receiver coil.

Specifically, in a preferred embodiment of the present invention, the inductances of the third coil and the fourth coil are set to be 40uH, and the inductance of the inductor LF2 is set to be 20uH, and the capacitance value of the capacitor CF2 can be given according to the relation of $C_{F2} * L_{F2} = \frac{1}{w_0^2}$.

An example useful for understanding the present invention is configured to set the mutual inductances of the transmitter coil and the receiver coil to be 6uH, according to the following relation equations,

$$L_{VPA} = L_{VPAllk} + L_m;$$

$$L_{VPB} = L_{VPBllk} + L_m;$$

it is possible to give leakage inductances of the third coil and the fourth coil, respectively; and finally, according to the following relation equation,

$$C_{2A} + L_{VPAllk} = C_{2B} + L_{VPBllk} = \frac{1}{w_0^2};$$

It is possible to give capacitance values of the capacitor C2A and the capacitor C2B, respectively; thus, all parameters of the vehicle terminal have been designed.

The invention also proposes an electric vehicle, which adopts the wireless charging system described above.

Further, the electric vehicle includes at least a low-speed four-wheeled electric vehicle, a low-speed two-wheeled electric vehicle, a low-speed logistics vehicle, a four-wheeled passenger vehicle, a four-wheeled commercial vehicle and the likes.

Compared with the prior art, in the present invention, the transmitter coil and the receiver coil are provided with a tap structure, which can enable the voltages of the transmitter coil and the receiver coil to decrease by one time, solving the insulation and safety control problems caused by the high voltages of the transmitter coil and the receiver coil, improving the reliability of products and reducing development costs and material costs for products.

**Claims**

1. A wireless charging system comprising:

a pile terminal used for wireless charging, wherein the pile terminal is an energy supply unit configured to provide direct current;
a ground terminal, including an inverter circuit connected with the pile terminal, a first LCC compensation circuit connected with the inverter circuit, and a transmitter coil used for wireless charging;
and a vehicle terminal, including a rectifier circuit connected with an on-board battery, a second LCC compensation circuit connected with the rectifier circuit, and a receiver coil matching with the transmitter coil,
**characterized in that**
the transmitter coil comprises a first coil (LBPA) and a second coil (LBPB) that are used to form a center tap structure; wherein a second end of the first coil is connected with a first end of the second coil to form a center tapped end;
the receiver coil comprises a third coil (LVPA) and a fourth coil (LVPB) that are used to form a center tap structure; wherein the third coil is configured to match the first coil, the fourth coil is configured to match the second coil, and a second end of the third coil is connected with a first end of the fourth coil to form a center tapped end;
the first LCC compensation circuit comprises a first inductor (LF1), a capacitor CF1, a capacitor C1A and a capacitor C1B;
one end of the first inductor (LF1) is directly connected to the inverter circuit, the other end of the first inductor is directly connected with one end of the capacitor C1A, wherein the other end of the capacitor C1A is directly connected to a first end of the first coil;
one end of the capacitor C1B is directly connected between the first inductor (LF1) and the capacitor C1A, the other end of the capacitor is directly connected to a second end of the second coil; one end of the capacitor CF1 is directly connected between the first inductor (LF1) and the capacitor C1A, and the other end of the capacitor CF1 is directly connected to the center tapped end of the transmitter coil;
the second LCC compensation circuit comprises a second inductor (LF2), a capacitor CF2, a capacitor C2A and a capacitor C2B,
one end of the second inductor (LF2) is directly connected to the rectifier circuit, the other end of the second inductor (LF2) is directly connected with one end of the capacitor C2A, wherein the other end of the capacitor C2A is directly connected to a first end of the third coil,
one end of the capacitor C2B is directly connected between the second inductor (LF2) and the capacitor C2A, the other end of the capacitor C2B is directly connected to a second end of the fourth coil;
one end of the capacitor CF2 is directly connected between the second inductor (LF2) and the capacitor C2A, and the other end of the capacitor CF2 is directly connected to the center tapped end of the receiver coil.

2. The wireless charging system according to claim 1, wherein the first coil and the second coil are arranged separately; and wherein the third coil and the fourth coil are arranged separately.

3. The wireless charging system according to claim 1, wherein the inverter circuit comprises a power switch transistor Q1, a power switch transistor Q2, a power switch transistor Q3, a power switch transistor Q4 that are used to form a full-bridge circuit, and the power switch transistor Q1 and the power switch transistor Q2 form a first bridge arm, and the power switch transistor Q3 and the power switch transistor Q4 form a second bridge arm;
drain electrodes of the power switch transistor Q1 and the power switch transistor Q3 are connected to a positive end of an input voltage (Vin), source electrodes of the power switch transistor Q2 and the power switch transistor Q4 are connected to a negative end of the input voltage (Vin), the first inductor (LF1) is connected between a source electrode of the power switch transistor Q1 and a drain electrode of the power switch transistor Q2, and the center tapped end of the transmitter coil is connected between a source electrode of the power switch transistor Q3 and a drain electrode of the power switch transistor Q4.

4. The wireless charging system according to claim 3 wherein duty ratios of the power switch transistor Q1, the power switch transistor Q2, the power switch transistor Q3 and the power switch transistor Q4 are set as 0.5, and the power switch transistor Q1 conducts with the power switch transistor Q2 in a complementary mode, and the power switch transistor Q3 conducts with the power switch transistor Q4 in a complementary mode; in addition, an output voltage of the inverter circuit is adjusted according to a phase shift angle between the power switch transistor Q2 and the power switch transistor Q4.

5. The wireless charging system according to claim 3 wherein the power switch transistor Q1 conducts with the power switch transistor Q2 in a complementary mode and the power switch transistor Q3 conducts with the power switch transistor Q4 in a complementary mode; in addition, a phase difference between the power switch transistor Q2 and the power switch transistor Q4 is set to be $\pi$, and both the transistors have a same duty ratio, and the output voltage of the inverter circuit is adjusted according to the duty ratio of the power switch transistor Q2 and the power switch transistor Q4.

6. The wireless charging system according to claim 1, wherein the rectifier circuit comprises a power switch transistor Q5, a power switch transistor Q6, a power switch transistor Q7, a power switch transistor Q8 that are used to form a full-bridge circuit, and the power switch transistor Q5 and the power switch transistor Q6 form a third bridge arm, and the power switch transistor Q7 and the power switch transistor Q8 form a fourth bridge arm;
drain electrodes of the power switch transistor Q5 and the power switch transistor Q7 are connected to a positive end of an output voltage (Vout), source electrodes of the power switch transistor Q6 and the power switch transistor Q8 are connected to a negative end of the output voltage (Vout), the second inductor (LF2) is connected between a source electrode of the power switch transistor Q5 and a drain electrode of the power switch transistor Q6, and the center tapped end of the receiver coil is connected between a source electrode of the power switch transistor Q7 and a drain electrode of the power switch transistor Q8.

7. The wireless charging system according to claim 6 wherein duty ratios of the power switch transistor Q5, the power switch transistor Q6, the power switch transistor Q7 and the power switch transistor Q8 are set as 0.5, and the power switch transistor Q5 conducts with the power switch transistor Q6 in a complementary mode, and the power switch transistor Q7 conducts with the power switch transistor Q8 in a complementary mode; in addition, an input voltage of the rectifier circuit is adjusted according to a phase shift angle between the power switch transistor Q6 and the power switch transistor Q8.

8. The wireless charging system according to claim 6 wherein the power switch transistor Q5 conducts with the power switch transistor Q6 in a complementary mode and the power switch transistor Q7 conducts with the power switch transistor Q8 in a complementary mode; in addition, a phase difference between the power switch transistor Q6 and the power switch transistor Q8 is set to be $\pi$, and both the transistors have a same duty ratio, and the input voltage of the rectifier circuit is adjusted according to the duty ratio of the power switch transistor Q6 and the power switch transistor Q8.

9. The wireless charging system according to claim 1, wherein the rectifier circuit comprises a first diode (D5), a second diode (D7), a power switch transistor Q6, and a power switch transistor Q8;
negative electrodes of the first diode (D5) and the second diode (D7) are connected to a positive end of an output voltage (Vout); source electrodes of the power switch transistor Q6 and the power switch transistor Q8 are connected to a negative end of the output voltage (Vout), and the second inductor (LF2) is connected between a positive electrode of the first diode (D5) and a drain electrode of the power switch transistor Q6, and the center tapped end of the receiver coil is connected between a positive electrode of the second diode (D7) and a drain electrode of the power switch transistor Q8.

10. The wireless charging system according to claim 9, wherein a phase difference between the power switch transistor Q6 and the power switch transistor Q8 is set to be $\pi$; in addition, the power switch transistor Q6 and the power switch transistor Q8 have a same duty ratio, and an input voltage of the rectifier circuit is adjusted according to the duty ratio of the power switch transistor Q6 and the power switch transistor Q8.

11. An electric vehicle having the wireless charging system according to any one of claims 1 to 10

**Patentansprüche**

1. Ein drahtloses Ladesystem, umfassend:

ein Ladesäulenterminal, das zum drahtlosen Laden verwendet wird, wobei das Ladesäulenterminal eine Energieversorgungseinheit ist, die dazu ausgebildet ist, Gleichstrom bereitzustellen;
ein bodenseitiges Terminal, das eine mit dem Ladesäulenterminal verbundene Inverterschaltung, eine mit der Inverterschaltung verbundene erste LCC-Kompensationsschaltung und eine zum drahtlosen Laden verwendete Sender-Spule umfasst;
und ein fahrzeugseitiges Terminal, das eine mit einer Fahrzeugbatterie verbundene Gleichrichterschaltung, eine mit der Gleichrichterschaltung verbundene zweite LCC-Kompensationsschaltung und eine mit der Sender-Spule zusammenwirkende Empfänger-Spule umfasst,

**dadurch gekennzeichnet, dass**

die Sender-Spule eine erste Spule (LBPA) und eine zweite Spule (LBPB) umfasst, die dazu verwendet werden, eine Mittelanzapfungsstruktur zu bilden; wobei ein zweites Ende der ersten Spule mit einem ersten Ende der zweiten Spule verbunden ist, um ein Mittelanzapfungsende zu bilden;

die Empfänger-Spule eine dritte Spule (LVPA) und eine vierte Spule (LVPB) umfasst, die dazu verwendet werden, eine Mittelanzapfungsstruktur zu bilden; wobei die dritte Spule dazu ausgebildet ist, mit der ersten Spule zusammenzuwirken, die vierte Spule dazu ausgebildet ist, mit der zweiten Spule zusammenzuwirken, und ein zweites Ende der dritten Spule mit einem ersten Ende der vierten Spule verbunden ist, um ein Mittelanzapfungsende zu bilden;

die erste LCC-Kompensationsschaltung eine erste Induktivität (LF1), einen Kondensator CF1, einen Kondensator C1A und einen Kondensator C1B umfasst;

ein Ende der ersten Induktivität (LF1) direkt mit der Inverterschaltung verbunden ist, das andere Ende der ersten Induktivität direkt mit einem Ende des Kondensators C1A verbunden ist, wobei das andere Ende des Kondensators C1A direkt mit einem ersten Ende der ersten Spule verbunden ist;

ein Ende des Kondensators C1B direkt zwischen der ersten Induktivität (LF1) und dem Kondensator C1A verbunden ist, das andere Ende des Kondensators direkt mit einem zweiten Ende der zweiten Spule verbunden ist; ein Ende des Kondensators CF1 direkt zwischen der ersten Induktivität (LF1) und dem Kondensator C1A verbunden ist, und das andere Ende des Kondensators CF1 direkt mit dem Mittelanzapfungsende der Sender-Spule verbunden ist;

die zweite LCC-Kompensationsschaltung eine zweite Induktivität (LF2), einen Kondensator CF2, einen Kondensator C2A und einen Kondensator C2B umfasst,

ein Ende der zweiten Induktivität (LF2) direkt mit der Gleichrichterschaltung verbunden ist, das andere Ende der zweiten Induktivität (LF2) direkt mit einem Ende des Kondensators C2A verbunden ist, wobei das andere Ende des Kondensators C2A direkt mit einem ersten Ende der dritten Spule verbunden ist,

ein Ende des Kondensators C2B direkt zwischen der zweiten Induktivität (LF2) und dem Kondensator C2A verbunden ist, das andere Ende des Kondensators C2B direkt mit einem zweiten Ende der vierten Spule verbunden ist;

ein Ende des Kondensators CF2 direkt zwischen der zweiten Induktivität (LF2) und dem Kondensator C2A verbunden ist, und das andere Ende des Kondensators CF2 direkt mit dem Mittelanzapfungsende der Empfänger-Spule verbunden ist.

2. Das drahtlose Ladesystem nach Anspruch 1, wobei die erste Spule und die zweite Spule getrennt angeordnet sind; und wobei die dritte Spule und die vierte Spule getrennt angeordnet sind.

3. Das drahtlose Ladesystem nach Anspruch 1, wobei die Inverterschaltung einen Leistungsschalttransistor Q1, einen Leistungsschalttransistor Q2, einen Leistungsschalttransistor Q3 und einen Leistungsschalttransistor Q4 umfasst, die dazu verwendet werden, eine Vollbrückenschaltung zu bilden, und der Leistungsschalttransistor Q1 und der Leistungsschalttransistor Q2 einen ersten Brückenzweig bilden, und der Leistungsschalttransistor Q3 und der Leistungsschalttransistor Q4 einen zweiten Brückenzweig bilden;

Drain-Elektroden des Leistungsschalttransistors Q1 und des Leistungsschalttransistors Q3 mit einem positiven Ende einer Eingangsspannung (Vin) verbunden sind, Source-Elektroden des Leistungsschalttransistors Q2 und des Leistungsschalttransistors Q4 mit einem negativen Ende der Eingangsspannung (Vin) verbunden sind, die erste Induktivität (LF1) zwischen einer Source-Elektrode des Leistungsschalttransistors Q1 und einer Drain-Elektrode des Leistungsschalttransistors Q2 verbunden ist, und das Mittelanzapfungsende der Sender-Spule zwischen einer Source-Elektrode des Leistungsschalttransistors Q3 und einer Drain-Elektrode des Leistungsschalttransistors Q4 verbunden ist.

4. Das drahtlose Ladesystem nach Anspruch 3, wobei Tastverhältnisse des Leistungsschalttransistors Q1, des Leistungsschalttransistors Q2, des Leistungsschalttransistors Q3 und des Leistungsschalttransistors Q4 auf 0,5 gesetzt sind, und der Leistungsschalttransistor Q1 mit dem Leistungsschalttransistor Q2 in einem komplementären Modus leitet, und der Leistungsschalttransistor Q3 mit dem Leistungsschalttransistor Q4 in einem komplementären Modus leitet; ferner wird eine Ausgangsspannung der Inverterschaltung gemäß einem Phasenverschiebungswinkel zwischen dem Leistungsschalttransistor Q2 und dem Leistungsschalttransistor Q4 eingestellt.

5. Das drahtlose Ladesystem nach Anspruch 3, wobei der Leistungsschalttransistor Q1 mit dem Leistungsschalttransistor Q2 in einem komplementären Modus leitet und der Leistungsschalttransistor Q3 mit dem Leistungsschalt-

ransistor Q4 in einem komplementären Modus leitet; ferner wird eine Phasendifferenz zwischen dem Leistungsschalttransistor Q2 und dem Leistungsschalttransistor Q4 auf $\pi$ gesetzt, und beide Transistoren haben dasselbe Tastverhältnis, und die Ausgangsspannung der Inverterschaltung wird gemäß dem Tastverhältnis des Leistungsschalttransistors Q2 und des Leistungsschalttransistors Q4 eingestellt.

6. Das drahtlose Ladesystem nach Anspruch 1, wobei die Gleichrichterschaltung einen Leistungsschalttransistor Q5, einen Leistungsschalttransistor Q6, einen Leistungsschalttransistor Q7 und einen Leistungsschalttransistor Q8 umfasst, die dazu verwendet werden, eine Vollbrückenschaltung zu bilden, und der Leistungsschalttransistor Q5 und der Leistungsschalttransistor Q6 einen dritten Brückenzweig bilden, und der Leistungsschalttransistor Q7 und der Leistungsschalttransistor Q8 einen vierten Brückenzweig bilden;
Drain-Elektroden des Leistungsschalttransistors Q5 und des Leistungsschalttransistors Q7 mit einem positiven Ende einer Ausgangsspannung (Vout) verbunden sind, Source-Elektroden des Leistungsschalttransistors Q6 und des Leistungsschalttransistors Q8 mit einem negativen Ende der Ausgangsspannung (Vout) verbunden sind, die zweite Induktivität (LF2) zwischen einer Source-Elektrode des Leistungsschalttransistors Q5 und einer Drain-Elektrode des Leistungsschalttransistors Q6 verbunden ist, und das Mittelanzapfungsende der Empfänger-Spule zwischen einer Source-Elektrode des Leistungsschalttransistors Q7 und einer Drain-Elektrode des Leistungsschalttransistors Q8 verbunden ist.

7. Das drahtlose Ladesystem nach Anspruch 6, wobei Tastverhältnisse des Leistungsschalttransistors Q5, des Leistungsschalttransistors Q6, des Leistungsschalttransistors Q7 und des Leistungsschalttransistors Q8 auf 0,5 gesetzt sind, und der Leistungsschalttransistor Q5 mit dem Leistungsschalttransistor Q6 in einem komplementären Modus leitet, und der Leistungsschalttransistor Q7 mit dem Leistungsschalttransistor Q8 in einem komplementären Modus leitet; ferner wird eine Eingangsspannung der Gleichrichterschaltung gemäß einem Phasenverschiebungswinkel zwischen dem Leistungsschalttransistor Q6 und dem Leistungsschalttransistor Q8 eingestellt.

8. Das drahtlose Ladesystem nach Anspruch 6, wobei der Leistungsschalttransistor Q5 mit dem Leistungsschalttransistor Q6 in einem komplementären Modus leitet und der Leistungsschalttransistor Q7 mit dem Leistungsschalt-ransistor Q8 in einem komplementären Modus leitet; ferner wird eine Phasendifferenz zwischen dem Leistungsschalttransistor Q6 und dem Leistungsschalttransistor Q8 auf $\pi$ gesetzt, und beide Transistoren haben dasselbe Tastverhältnis, und die Eingangsspannung der Gleichrichterschaltung wird gemäß dem Tastverhältnis des Leistungsschalttransistors Q6 und des Leistungsschalttransistors Q8 eingestellt.

9. Das drahtlose Ladesystem nach Anspruch 1, wobei die Gleichrichterschaltung eine erste Diode (D5), eine zweite Diode (D7), einen Leistungsschalttransistor Q6 und einen Leistungsschalttransistor Q8 umfasst;
negative Elektroden der ersten Diode (D5) und der zweiten Diode (D7) mit einem positiven Ende einer Ausgangsspannung (Vout) verbunden sind; Source-Elektroden des Leistungsschalttransistors Q6 und des Leistungsschalt-ransistors Q8 mit einem negativen Ende der Ausgangsspannung (Vout) verbunden sind, und die zweite Induktivität (LF2) zwischen einer positiven Elektrode der ersten Diode (D5) und einer Drain-Elektrode des Leistungsschalttransistors Q6 verbunden ist, und das Mittelanzapfungsende der Empfänger-Spule zwischen einer positiven Elektrode der zweiten Diode (D7) und einer Drain-Elektrode des Leistungsschalttransistors Q8 verbunden ist.

10. Das drahtlose Ladesystem nach Anspruch 9, wobei eine Phasendifferenz zwischen dem Leistungsschalttransistor Q6 und dem Leistungsschalttransistor Q8 auf $\pi$ gesetzt ist; ferner haben der Leistungsschalttransistor Q6 und der Leistungsschalttransistor Q8 dasselbe Tastverhältnis, und eine Eingangsspannung der Gleichrichterschaltung wird gemäß dem Tastverhältnis des Leistungsschalttransistors Q6 und des Leistungsschalttransistors Q8 eingestellt.

11. Ein Elektrofahrzeug mit dem drahtlosen Ladesystem nach einem der Ansprüche 1 bis 10.

**Revendications**

1. Un système de charge sans fil comprenant :

    une borne de charge utilisée pour la charge sans fil, dans laquelle la borne de charge est une unité d'alimentation en énergie configurée pour fournir du courant continu ;
    une borne au sol comprenant un circuit onduleur connecté à la borne de charge, un premier circuit de compensation LCC connecté au circuit onduleur, et une bobine émettrice utilisée pour la charge sans fil ;
    et une borne de véhicule comprenant un circuit redresseur connecté à une batterie embarquée, un deuxième circuit de compensation LCC connecté au circuit redresseur, et une bobine réceptrice appariée à la bobine émettrice,

**caractérisé en ce que**

la bobine émettrice comprend une première bobine (LBPA) et une deuxième bobine (LBPB) qui sont utilisées pour former une structure à prise médiane ; dans laquelle une deuxième extrémité de la première bobine est connectée à une première extrémité de la deuxième bobine pour former une extrémité à prise médiane ;

la bobine réceptrice comprend une troisième bobine (LVPA) et une quatrième bobine (LVPB) qui sont utilisées pour former une structure à prise médiane ; dans laquelle la troisième bobine est configurée pour s'apparier à la première bobine, la quatrième bobine est configurée pour s'apparier à la deuxième bobine, et une deuxiè me extrémité de la troisième bobine est connectée à une première extrémité de la quatrième bobine pour former une extrémité à prise médiane ;

le premier circuit de compensation LCC comprend une première inductance (LF1), un condensateur CF1, un condensateur C1A et un condensateur C1B ;

une extrémité de la première inductance (LF1) est directement connectée au circuit onduleur, l'autre extrémité de la première inductance étant directement connectée à une extrémité du condensateur C1A, dans lequel l'autre extrémité du condensateur C1A est directement connectée à une première extrémité de la première bobine ;

une extrémité du condensateur C1B est directement connectée entre la première inductance (LF1) et le condensateur C1A, l'autre extrémité du condensateur étant directement connectée à une deuxième extrémité de la deuxième bobine ; une extrémité du condensateur CF1 est directement connectée entre la première inductance (LF1) et le condensateur C1A, et l'autre extrémité du condensateur CF1 est directement connectée à l'extrémité à prise médiane de la bobine émettrice ;

le deuxième circuit de compensation LCC comprend une deuxième inductance (LF2), un condensateur CF2, un condensateur C2A et un condensateur C2B,

une extrémité de la deuxième inductance (LF2) est directement connectée au circuit redresseur, l'autre extrémité de la deuxième inductance (LF2) étant directement connectée à une extrémité du condensateur C2A, dans lequel l'autre extrémité du condensateur C2A est directement connectée à une première extrémité de la troisième bobine,

une extrémité du condensateur C2B est directement connectée entre la deuxième inductance (LF2) et le condensateur C2A, l'autre extrémité du condensateur C2B étant directement connectée à une deuxième extrémité de la quatrième bobine ;

une extrémité du condensateur CF2 est directement connectée entre la deuxième inductance (LF2) et le condensateur C2A, et l'autre extrémité du condensateur CF2 est directement connectée à l'extrémité à prise médiane de la bobine réceptrice.

2.  Le système de charge sans fil selon la revendication 1, dans lequel la première bobine et la deuxième bobine sont disposées séparément ; et dans lequel la troisième bobine et la quatrième bobine sont disposées séparément.

3.  Le système de charge sans fil selon la revendication 1, dans lequel le circuit onduleur comprend un transistor interrupteur de puissance Q1, un transistor interrupteur de puissance Q2, un transistor interrupteur de puissance Q3 et un transistor interrupteur de puissance Q4 qui sont utilisés pour former un circuit en pont complet, et le transistor interrupteur de puissance Q1 et le transistor interrupteur de puissance Q2 forment un premier bras de pont, et le transistor interrupteur de puissance Q3 et le transistor interrupteur de puissance Q4 forment un deuxième bras de pont ;

des électrodes de drain du transistor interrupteur de puissance Q1 et du transistor interrupteur de puissance Q3 sont connectées à une extrémité positive d'une tension d'entrée (Vin), des électrodes de source du transistor interrupteur de puissance Q2 et du transistor interrupteur de puissance Q4 sont connectées à une extrémité négative de la tension d'entrée (Vin), la première inductance (LF1) est connectée entre une électrode de source du transistor interrupteur de puissance Q1 et une électrode de drain du transistor interrupteur de puissance Q2, et l'extrémité à prise médiane de la bobine émettrice est connectée entre une électrode de source du transistor interrupteur de puissance Q3 et une électrode de drain du transistor interrupteur de puissance Q4.

4.  Le système de charge sans fil selon la revendication 3, dans lequel des rapports cycliques du transistor interrupteur de puissance Q1, du transistor interrupteur de puissance Q2, du transistor interrupteur de puissance Q3 et du transistor interrupteur de puissance Q4 sont fixés à 0,5, et le transistor interrupteur de puissance Q1 conduit avec le transistor interrupteur de puissance Q2 selon un mode complémentaire, et le transistor interrupteur de puissance Q3 conduit avec le transistor interrupteur de puissance Q4 selon un mode complémentaire ; en outre, une tension de sortie du circuit onduleur est ajustée selon un angle de déphasage entre le transistor interrupteur de puissance Q2 et le transistor interrupteur de puissance Q4.

5. Le système de charge sans fil selon la revendication 3, dans lequel le transistor interrupteur de puissance Q1 conduit avec le transistor interrupteur de puissance Q2 selon un mode complémentaire et le transistor interrupteur de puissance Q3 conduit avec le transistor interrupteur de puissance Q4 selon un mode complémentaire ; en outre, une différence de phase entre le transistor interrupteur de puissance Q2 et le transistor interrupteur de puissance Q4 est fixée à $\pi$, et les deux transistors ont un même rapport cyclique, et la tension de sortie du circuit onduleur est ajustée selon le rapport cyclique du transistor interrupteur de puissance Q2 et du transistor interrupteur de puissance Q4.

6. Le système de charge sans fil selon la revendication 1, dans lequel le circuit redresseur comprend un transistor interrupteur de puissance Q5, un transistor interrupteur de puissance Q6, un transistor interrupteur de puissance Q7 et un transistor interrupteur de puissance Q8 qui sont utilisés pour former un circuit en pont complet, et le transistor interrupteur de puissance Q5 et le transistor interrupteur de puissance Q6 forment un troisième bras de pont, et le transistor interrupteur de puissance Q7 et le transistor interrupteur de puissance Q8 forment un quatrième bras de pont ;
des électrodes de drain du transistor interrupteur de puissance Q5 et du transistor interrupteur de puissance Q7 sont connectées à une extrémité positive d'une tension de sortie (Vout), des électrodes de source du transistor interrupteur de puissance Q6 et du transistor interrupteur de puissance Q8 sont connectées à une extrémité négative de la tension de sortie (Vout), la deuxième inductance (LF2) est connectée entre une électrode de source du transistor interrupteur de puissance Q5 et une électrode de drain du transistor interrupteur de puissance Q6, et l'extrémité à prise médiane de la bobine réceptrice est connectée entre une électrode de source du transistor interrupteur de puissance Q7 et une électrode de drain du transistor interrupteur de puissance Q8.

7. Le système de charge sans fil selon la revendication 6, dans lequel des rapports cycliques du transistor interrupteur de puissance Q5, du transistor interrupteur de puissance Q6, du transistor interrupteur de puissance Q7 et du transistor interrupteur de puissance Q8 sont fixés à 0,5, et le transistor interrupteur de puissance Q5 conduit avec le transistor interrupteur de puissance Q6 selon un mode complémentaire, et le transistor interrupteur de puissance Q7 conduit avec le transistor interrupteur de puissance Q8 selon un mode complémentaire ; en outre, une tension d'entrée du circuit redresseur est ajustée selon un angle de déphasage entre le transistor interrupteur de puissance Q6 et le transistor interrupteur de puissance Q8.

8. Le système de charge sans fil selon la revendication 6, dans lequel le transistor interrupteur de puissance Q5 conduit avec le transistor interrupteur de puissance Q6 selon un mode complémentaire et le transistor interrupteur de puissance Q7 conduit avec le transistor interrupteur de puissance Q8 selon un mode complémentaire ; en outre, une différence de phase entre le transistor interrupteur de puissance Q6 et le transistor interrupteur de puissance Q8 est fixée à $\pi$, et les deux transistors ont un même rapport cyclique, et la tension d'entrée du circuit redresseur est ajustée selon le rapport cyclique du transistor interrupteur de puissance Q6 et du transistor interrupteur de puissance Q8.

9. Le système de charge sans fil selon la revendication 1, dans lequel le circuit redresseur comprend une première diode (D5), une deuxième diode (D7), un transistor interrupteur de puissance Q6 et un transistor interrupteur de puissance Q8 ;
des électrodes négatives de la première diode (D5) et de la deuxième diode (D7) sont connectées à une extrémité positive d'une tension de sortie (Vout) ; des électrodes de source du transistor interrupteur de puissance Q6 et du transistor interrupteur de puissance Q8 sont connectées à une extrémité négative de la tension de sortie (Vout), et la deuxième inductance (LF2) est connectée entre une électrode positive de la première diode (D5) et une électrode de drain du transistor interrupteur de puissance Q6, et l'extrémité à prise médiane de la bobine réceptrice est connectée entre une électrode positive de la deuxième diode (D7) et une électrode de drain du transistor interrupteur de puissance Q8.

10. Le système de charge sans fil selon la revendication 9, dans lequel une différence de phase entre le transistor interrupteur de puissance Q6 et le transistor interrupteur de puissance Q8 est fixée à $\pi$ ; en outre, le transistor interrupteur de puissance Q6 et le transistor interrupteur de puissance Q8 ont un même rapport cyclique, et une tension d'entrée du circuit redresseur est ajustée selon le rapport cyclique du transistor interrupteur de puissance Q6 et du transistor interrupteur de puissance Q8.

11. Un véhicule électrique comprenant le système de charge sans fil selon l'une quelconque des revendications 1 à 10.

FIG.1

FIG.2

FIG.3

FIG.4

FIG.5

FIG.6

FIG.7

FIG.8

FIG.9

FIG.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 115056660 A
- US 2016020615 A1